# EUROPÄISCHE PATENTSCHRIFT

(11) **EP 0 813 262 B1**
(45) Veröffentlichungstag und Bekanntmachung des Hinweises auf die Patenterteilung: **04.10.2000**
(21) Anmeldenummer: 97107049.5
(22) Anmeldetag: 29.04.1997
(51) Int. Cl.: H01M 8/06, C01B 3/32

(54) **Verfahren zum Betrieb einer Anlage zur Wasserdampfreformierung von Methanol**
Process for operating a device for steam reforming of methanol
Procédé de fonctionnement d'un dispositif de reformage à la vapeur d'eau de méthanol

(30) Priorität: 15.06.1996 DE 19623937
(43) Veröffentlichungstag der Anmeldung: 17.12.1997
(73) Patentinhaber: XCELLSIS GmbH, 73230 Kirchheim / Teck-Nabern (DE)
(72) Erfinder: Denda, Michael, 89250 Senden (DE); Dülk, Christian, 89081 Ulm (DE); Gerberich, Robert, 89134 Blaustein (DE); Wiesheu, Norbert, 89312 Günzburg (DE)
(74) Vertreter: Kocher, Klaus-Peter

(56) Entgegenhaltungen:
- EP-A- 0 710 835
- EP-A- 0 813 263
- US-A- 3 585 078
- PATENT ABSTRACTS OF JAPAN vol. 096, no. 004, 30. April 1996 & JP 07 320763 A (NGK INSULATORS LTD), 8. Dezember 1995
- PATENT ABSTRACTS OF JAPAN vol. 007, no. 094 (E-171), 20. April 1983 & JP 58 018881 A (MITSUI TOATSU KAGAKU KK), 3. Februar 1983

## Beschreibung

Die Erfindung bezieht sich auf ein Verfahren zum Betrieb einer Anlage zur Wasserdampfreformierung von Methanol nach dem Oberbegriff des Anspruchs 1. Mit derartigen Verfahren werden beispielsweise mobile Anlagen zur Wasserdampfreformierung von Methanol in brennstoffzellenbetriebenen Kraftfahrzeugen betrieben, um Wasserstoff für die Speisung der Brennstoffzellen zu gewinnen.

Zum Betrieb derartiger Anlagen ist es bekannt, die in den Reformierungsreaktor eingeleitete Menge an aufbereitetem Wasserdampf/ Methanol-Gemisch abhängig vom Lastzustand der Anlage variabel einzustellen. In der Auslegeschrift DE 1 949 184 und der Patentschrift DE 21 57 722 C2 ist zu diesem Zweck mit der Modifikation, daß dort Methan anstelle von Methanol verwendet wird, eine Strahlpumpe vorgesehen, deren Dampfdurchfluß in Abhängigkeit vom Lastzustand der Anlage eingestellt wird, wodurch sich bei Lastwechsel auch der Methanzufluß entsprechend der Strahlpumpencharakteristik ändert.

In der Patentschrift US 5.401.589 ist ein Verfahren zum Betrieb eines Brennstoffzellensystems in einem Kraftfahrzeug mit einer den Brennstoffzellen vorgeschalteten Anlage zur Wasserdampfreformierung von Methanol zwecks Gewinnung des für die Brennstoffzellen benötigten Wasserstoffs offenbart. Um schneller als allein durch Änderung der Menge des in den Reformierungsreaktor eingeleiteten Wasserdampf/Methanol-Gemischs auf Lastwechsel reagieren zu können, sind dort einerseits eine Pufferbatterie und andererseits Sauerstoffreservoirs vorgesehen, aus denen bei erhöhtem Lastbedarf zusätzlicher Sauerstoff zur Einleitung in das Brennstoffzellensystem entnommen wird. Es ist aus dieser sowie anderen Druckschriften auch bekannt, daß bei zu geringer Wasserdampfkonzentration im Wasserdampf/Methanol-Gasgemisch bei dessen Reformierung eine erhöhte CO-Konzentration im Reformat entsteht. Dies ist insbesondere bei Verwendung des Reformats als Brennstoff in sogenannten PEM-Brennstoffzellen unerwünscht, da diese durch Kohlenmonoxid vergiftet werden. Üblicherweise wird daher das Wasserdampf/Methanol-Mischungsverhältnis im Bereich zwischen eins und zehn gehalten.

In der Offenlegungsschrift JP 62-46902 (A) ist ein Verdampfer für eine Methanolreformierungsanlage offenbart, der ein spulenförmiges Verdampferrohr beinhaltet, dessen Durchmesser von einem oberen, einem Brenner benachbarten Bereich bis zu einem unteren Bereich stufenweise zunimmt. Mit dieser Durchmesserzunahme wird der Volumenzunahme des durch den Verdampfer geführten Mediums beim Erhitzen durch den Brenner Rechnung getragen. Damit wird einem mit zunehmender Erwärmung schnelleren Fließen des Mediums durch das Verdampferrohr entgegengewirkt, wodurch sich verhindern läßt, daß das durch den Verdampfer geführte Wasser/Methanol-Gemisch speziell bei hohen Zufuhrmengen im ausgangsseitigen, unteren Teil des Verdampferrohrs wegen zu hoher Fließgeschwindigkeit nicht mehr ausreichend Wärme aufnimmt und es deshalb zu unerwünschten Wiederverflüssigungseffekten kommt.

Beim Betrieb von Anlagen zur Wasserdampfreformierung von Methanol wird nun beobachtet, daß bei Lastwechsel, d.h. bei Veränderung der Menge an in den Reformierungsreaktor eingeleitetem Wasserdampf/Methanol-Gemisch, eine Änderung des Wasserdampf/Methanol-Mischungsverhältnisses auftritt, die aus einer momentanen Veränderung der Verdampfungsbedingungen in der Anlage resultiert. Dies wiederum führt zu Schwankungen in der CO-Konzentration des Reformats, wodurch zeitweise unerwünscht hohe CO-Konzentrationen auftreten können, die in einem nachgeschalteten Oxidator entfernt werden müssen.

Der Erfindung liegt als technisches Problem die Bereitstellung eines Verfahrens der eingangs genannten Art zugrunde, mit dem sich das Entstehen unerwünscht hoher CO-Konzentrationen im Reformat insbesondere auch bei raschen Lastwechseln vermeiden läßt.

Die Erfindung löst dieses Problem durch die Bereitstellung eines Verfahrens mit den Merkmalen des Anspruchs 1. Bei diesem Verfahren wird das Wasserdampf/Methanol-Mischungsverhältnis des in den Reformierungsreaktor eingeleiteten Wasserdampf/Methanol-Gemischs auch bei Lastwechselvorgängen auf einem vorgebbaren Sollwert gehalten. Das Einhalten des vorgebbaren Mischungsverhältnis-Sollwertes auch bei plötzlichen Lastsprüngen hat zur Folge, daß beim Betrieb der Anlage zur Wasserdampfreformierung von Methanol keine unerwünscht hohen CO-Konzentrationen im Reformat auftreten, d.h. weder im stationären, noch im dynamischen Lastbetrieb. Das jeweils momentane Wasserdampf/Methanol-Mischungsverhältnis kann auf eine der herkömmlichen Arten entweder direkt durch eine vor dem Reformierungsreaktoreingang angeordnete Sensorik oder indirekt durch Messung der CO-Konzentration im Reformat erfaßt werden. Durch entsprechende Maßnahmen in der Gemischbereitungsstufe wird dann für die Einhaltung des jeweils vorgegebenen Mischungsverhältnis-Sollwertes gesorgt. Insbesondere läßt sich verfahrensgemäß ein zu starkes Absinken des Wasserdampf/Methanol-Mischungsverhältnisses unter den vorgebbaren Sollwert, der typischerweise zwischen eins und drei liegt, und damit eine zu hohe CO-Konzentration im Reformat vermeiden.

In einer Variante des Verfahrens ist zur Einhaltung des vorgegebenen Mischungsverhältnis-Sollwertes für eine Anlage, in deren Gemischbereitungsstufe Wasser und Methanol jeweils über ein Ventil getaktet eingespritzt werden, vorgesehen, daß der Einspritzbeginn und/oder die Einspritzdauer der Ventile in geeigneter Weise abhängig von der Abweichung des Istwertes des Wasserdampf/Methanol-Mischungsverhältnisses vom Sollwert veränderbar sind.

In einer weiteren Variante des Verfahrens wird für eine Einhaltung des vorgebbaren Mischungsverhältnis-Sollwertes bei plötzlichen Lastsprüngen dadurch gesorgt, daß das bereitete Wasserdampf/Methanol-Gemisch in einem Druckbehälter bei konstantem Druck und konstanter Temperatur bevorratet und von dort mit gleichbleibendem Wasserdampf/Methanol-Mischungsverhältnis einer dem Reformierungsreaktor vorgeschalteten Überhitzerstufe zugeführt wird.

In weiteren Varianten des Verfahrens wird die gesteuerte oder geregelte Einhaltung des Sollwertes des Wasserstoff/Methanol-Mischungsverhältnisses dadurch gewährleistet, daß bei Wasserverarmung des Gemischs gezielt Wasser in die Gemischdampfphase in der Gemischbereitungsstufe eingespritzt wird oder daß Wasser und Methanol in je einem eigenen Verdampfer getrennt verdampft und einer gemeinsamen Überhitzerstufe zugeführt werden oder in einem Tank in flüssiger Form vorgemischt und über ein gemeinsames Einspritzventil einer Verdampfer- oder Überhitzerstufe zugeführt werden.

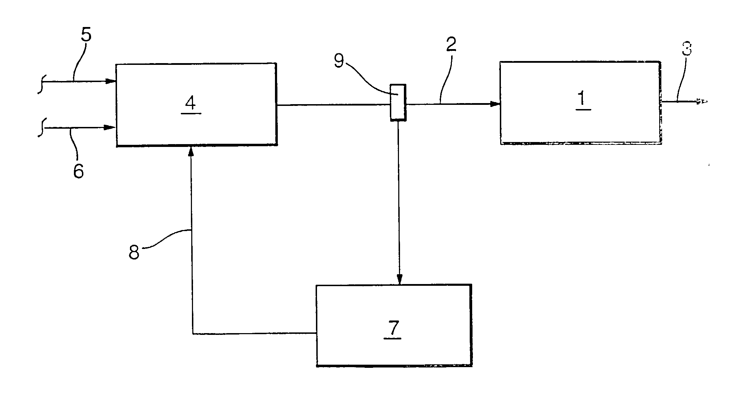

Bevorzugte Ausführungsformen der Erfindung werden nachfolgend anhand der Zeichnung beschrieben.

Die einzige Figur zeigt ein Blockdiagramm einer Anlage zur Wasserdampfreformierung von Methanol.

Die gezeigte Anlage ist von einem herkömmlichen Aufbau und besitzt als Herzstück einen Reformierungsreaktor (1), dem ein zu reformierendes Wasserdampf/Methanol-Gemisch (2) zugeführt wird, um daraus durch die Reformierungsreaktion ein am Reaktorausgang abgegebenes Reformat (3) zu erzeugen, das den gewünschten Wasserstoff und geringe Mengen Kohlenmonoxid enthält. Letzteres wird in einer nachfolgenden, nicht gezeigten Stufe in Kohlendioxid umgewandelt oder vom Wasserstoff separiert. In einer mobilen Anwendung kann die Reformierungsanlage in einem brennstoffzellenbetriebenen Kraftfahrzeug eingesetzt sein, um den zum Betrieb der Brennstoffzellen benötigten Wasserstoff zu erzeugen. Der Belastungszustand der Anlage äußert sich in dem Bedarf an aus dem Reformierungsreaktor austretendem Reformat.

Das in den Reformierungsreaktor (1) eingeleitete Wasserdampf/ Methanol-Gemisch wird in einer Gemischbereitungsstufe (4) bereitet, innerhalb welcher über eine Methanolzuleitung (5) eingeleitetes Methanol mit über eine Wasserzuleitung (6) eingeleitetem Wasser gemischt und erhitzt, d.h. verdampft, wird, wobei die Reihenfolge von Mischen einerseits und Erhitzen andererseits beliebig ist. Eine Steuer- oder Regeleinheit (7) steuert bzw. regelt den Anlagenbetrieb. Soweit dies auf herkömmliche Weise erfolgt, ist dies nicht näher dargestellt und braucht hier nicht weiter erläutert zu werden. Unter anderem steuert sie hierzu über einen Steuerleitungssatz (8) auch die Komponenten der Gemischbereitungsstufe (4) an.

Charakteristisch bei der gezeigten Anlage ist, daß die Komponenten der Gemischbereitungsstufe (4) von der Steuer- oder Regeleinheit (7) so angesteuert werden, daß nicht nur im stationären Anlagenbetrieb, sondern auch im dynamischen Anlagenbetrieb mit raschen Lastwechseln das Wasserdampf/Methanol-Mischungsverhältnis des in den Reformierungsreaktor (1) eingeleiteten Wasserdampf/Methanol-Gemischs (2) auf einem gewünschten, vorgebbaren Sollwert gehalten wird. Hierzu erfaßt die Steuer- oder Regeleinheit (7) über eine entsprechende Sensorik (9) laufend das momentane Wasserdampf/Methanol-Mischungsverhältnis des dem Reformierungsreaktor (1) zugeführten Wasserdampf/Methanol-Gemischs (2). Anstelle dieser direkten Erfassung des Wasserdampf/Methanol-Mischungsverhältnisses ist auch eine indirekte Erfassung durch laufende Messsung der CO-Konzentration im Reformat (3) möglich. Die Steuer- oder Regeleinheit (7) ändert dann die Gemischbereitung bei einer festgestellten Abweichung des Mischungsverhältnis-Istwertes vom vorgegebenen Sollwert in Richtung Ausregelung dieser Abweichung. Dies kann auf verschiedene Arten der Ansteuerung der jeweils zweckentsprechend aufgebauten Gemischbereitungsstufe (4) geschehen. Der Sollwert seinerseits kann in Abhängigkeit von der Anlagenbelastung konstant oder als langsam veränderliche Funktion vorgegeben sein.

Eine erste Möglichkeit der Prozeßsteuerung besteht darin, festgestellte Mischungsverhältnis-Abweichungen vom vorgegebenen Sollwert durch gezielte Änderungen der in die Gemischbereitungsstufe (4) eingeleiteten Fördermengen an Methanol und Wasser auszuregeln. Dazu beinhaltet die Gemischbereitungsstufe (4) dann je ein Einspritzventil für die Methanolzuleitung (5) und die Wasserzuleitung (6), und die Fördermengenvariation wird durch geeignete Variation des Einspritzbeginns oder durch unterschiedlich lange Einspritzventilöffnungszeiten für das jeweilige Ventil bewerkstelligt.

Eine weitere Möglichkeit des Ausgleichs einer bei einem raschen Lastwechsel auftretenden Wasserverarmung des Wasserdampf/Methanol-Gemischs (2) besteht in einer gezielten Einspritzung von Wasser in die Dampfphase innerhalb der Gemischbereitungsstufe (4) .

Des weiteren kann die Gemischbereitungsstufe (4) je einen eigenen Verdampfer zur getrennten Verdampfung von Methanol und Wasser sowie eine nachgeschaltete, gemeinsame Überhitzerstufe aufweisen. Mit einer solchen Vorgehensweise wird eine gegenseitige Beeinflussung der Verdampfungsvorgänge minimiert, was Schwankungen des Wasserdampf/Methanol-Mischungsverhältnisses bei Lastwechseln sehr gering hält.

Eine weitere Möglichkeit der Auslegung der Gemischbereitungsstufe (4), die sich zur Einhaltung eines vorgebbaren Mischungsverhältnis-Sollwertes eignet, besteht darin, einen Tank vorzusehen, in welchem die Gemischbestandteile in flüssiger Form vorgemischt und dann über ein gemeinsames Einspritzventil einer Verdampfer- oder Überhitzerstufe zugeführt werden.

Des weiteren kann das Mischungsverhältnis von Wasserdampf zu Methanol im dynamischen Anlagenbetrieb mit Lastwechselvorgängen dadurch auf einem vorgebbaren Sollwert gehalten werden, daß in der Gemischbereitungsstufe (4) ein Druckbehälter vorgesehen wird, dem die Gemischbestandteile zugeführt werden und in welchem sie unter konstantem Druck auf der gewünschten Temperatur gehalten werden. Aus diesem Druckbehälter kann dann das Wasserdampf/Methanol-Gemisch als Naßdampf mit auf dem Sollwert gehaltenem Wasserdampf/Methanol-Mischungsverhältnis einer anschließenden Überhitzerstufe zugeführt werden.

Mit den beschriebenen Maßnahmen können folglich Anlagen zur Wasserdampfreformierung von Methanol so betrieben werden, daß dynamische Änderungen des Wasserdampf/Methanol-Mischungsverhältnisses durch entsprechende, temporäre Änderungen der Gemischbereitung ausgeregelt werden. Damit lassen sich kurzzeitige Schwankungen des Wasserdampf/Methanol-Mischungsverhältnisses und damit unerwünschte, kurzzeitige Erhöhungen der CO-Konzentration im Reformat zuverlässig vermeiden.

## Patentansprüche

1. Verfahren zum Betrieb einer Anlage zur Wasserdampfreformierung von Methanol, bei dem
- in einer Gemischbereitungsstufe (4) aus Wasser und Methanol ein Wasserdampf/Methanol-Gemisch bereitet und
- das bereitete Wasserdampf/Methanol-Gemisch in einer vom Lastzustand der Anlage abhängigen Menge in einen Reformierungsreaktor (1) eingeleitet wird,
**dadurch gekennzeichnet, daß**
- das Wasserdampf/Methanol-Mischungsverhältnis des in den Reformierungsreaktor (1) eingeleiteten Wasserdampf/Methanol-Gemischs unbeeinflußt von kurzzeitigen Lastwechselvorgängen auf einem vorgebbaren Sollwert gehalten wird,
- indem Wasser und Methanol in der Gemischbereitungsstufe (4) jeweils über ein Ventil getaktet eingespritzt werden, wobei der Einspritzbeginn und/oder die Einspritzdauer abhängig von der Abweichung des Istwertes des Wasserdampf/Methanol-Mischungsverhältnisses vom Sollwert veränderbar sind, oder
- indem Wasser und Methanol in der Gemischbereitungsstufe (4) einem Druckbehälter zugeführt und unter konstantem Druck auf einer geeigneten Temperatur bevorratet gehalten werden und von dort als Naßdampfgemisch mit auf dem vorgegebenen Sollwert gehaltenem Wasserdampf/Methanol-Mischungsverhältnis einer Überhitzerstufe zugeführt werden oder
- indem bei Wasserverarmung des Wasserdampf/Methanol-Gemischs gezielt Wasser in die Gemischdampfphase in der Gemischbereitungsstufe (4) eingespritzt wird oder
- indem Wasser und Methanol in der Gemischbereitungsstufe (4) in je einem eigenen Verdampfer getrennt verdampft und einer gemeinsamen Überhitzerstufe zugeführt werden oder
- indem Wasser und Methanol in der Gemischbereitungsstufe (4) in einem Tank in flüssiger Form vorgemischt und über ein gemeinsames Einspritzventil einer Verdampfer- oder Überhitzerstufe zugeführt werden.

## Claims

1. Method for the operation of a unit for the steam re-forming of methanol, in which:
- a steam/methanol mixture is prepared from water and methanol in a mixture preparation stage (4), and
- the prepared steam/methanol mixture is fed to a re-forming reactor (1) in an amount that depends on the load condition of the unit,
**characterised in that**
- the steam/methanol mix ratio of the steam/methanol mixture fed into the re-forming reactor (1) is maintained at a specifiable nominal value without being influenced by transient load changes,
- in that water and methanol are each injected intermittently into the mixture preparation stage (4) through a valve, and the beginning and/or duration of the injection process can be varied as a function of the deviation of the actual value of the steam/methanol mix ratio from its nominal value, or
- in that water and methanol are fed to a pressure vessel in the mixture preparation stage (4) and stored therein under constant pressure at a suitable temperature, from whence they are fed, as a wet vapour mixture with its steam/methanol mix ratio held at the specified nominal value, to a superheater stage, or
- in that if the steam/methanol mixture becomes impoverished in water, water is appropriately injected into the mixed vapour phase in the mixture preparation stage (4), or
- in that in the mixture preparation stage (4) water and methanol are each vaporised separately in respective vaporisers of their own and are then passed on to a common superheater stage, or
- in that in the mixture preparation stage (4) water and methanol are pre-mixed in liquid form in a tank and are then fed via a common injection valve to a vaporiser or superheater stage.

## Revendications

1. Procédé de fonctionnement d'une installation pour le reformage à la vapeur d'eau de méthanol, dans lequel
- dans un étage de préparation de mélange (4), on prépare un mélange vapeur d'eau/méthanol, à partir d'eau et de méthanol, et
- le mélange vapeur/méthanol préparé est introduit en quantités, dépendant de l'état de charge de l'installation, dans un réacteur de reformage (1),
caractérisé en ce que
- le rapport de mélange vapeur d'eau/méthanol du mélange vapeur d'eau/méthanol introduit dans le réacteur de reformage (1) est maintenu à une valeur de consigne prédéterminable, sans être influencé par de brefs processus de variation de charge,
- de l'eau et du méthanol étant respectivement injectés, par une soupape, de façon cadencée dans l'étage de préparation de mélange (4), le commencement de l'injection et/ou la durée d'injection étant modifiables, indépendamment de l'écart entre la valeur réelle et la valeur de consigne du rapport de mélange vapeur d'eau/méthanol, ou
- l'eau et le méthanol sont amenés dans l'étage de préparation de mélange (4) à un réservoir à pression et maintenus en stockage à une pression constante, sous une température appropriée, et, de là, amenés sous forme de mélange de vapeur humide, avec un rapport de mélange vapeur d'eau/méthanol maintenu à la valeur de consigne prédéterminée, à un étage de surchauffe, ou
- lors de l'appauvrissement en eau du mélange vapeur d'eau/méthanol, de l'eau est injectée à dessein dans la phase de vapeur de mélange, dans l'étage de préparation de mélange (4) ou
- en ce que de l'eau et du méthanol sont vaporisés séparément dans l'étage de préparation de mélange (4), chacun dans un évaporateur propre, et amenés à un étage de surchauffe commun, ou
- en ce que l'eau et le méthanol sont prémélangés sous forme liquide dans un réservoir, dans l'étage de préparation de mélange (4), et sont amenés à un étage évaporateur ou surchauffeur, par l'intermédiaire d'une soupape d'injection commune.
